# EUROPEAN PATENT APPLICATION

(11) **EP 4 342 832 A1**
(43) Date of publication of application: **27.03.2024**
(21) Application number: 22803910.3
(22) Date of filing: 16.05.2022
(51) Int. Cl.: B65H 67/06, B65G 47/90, B65B 35/16

(54) **FULLY AUTOMATIC INTELLIGENT FEEDING APPARATUS AND FEEDING METHOD FOR CHEMICAL FIBER POY FILAMENT INGOT**

(30) Priority: 17.05.2021 CN 202110534896
(71) Applicant: Beijing National Innovation Institute of Lightweight Ltd., Beijing 100083 (CN); Riamb (Beijing) Technology Development Co., Ltd., Beijing 100120 (CN)
(72) Inventor: ZHANG, Qian, Beijing 100083 (CN); WANG, Yong, Beijing 100120 (CN); LI, Zhou, Beijing 100083 (CN); XU, Hui, Beijing 100120 (CN); XIANG, Yuancheng, Beijing 100083 (CN); WU, Zhenqiang, Beijing 100120 (CN); LI, Zhanwei, Beijing 100083 (CN); LU, Ying, Beijing 100083 (CN)
(74) Representative: Hirsch & Associés
(86) International application number: PCT/CN2022/093003
(87) International publication number: WO 2022/242588

(57) **Abstract**

A fully automatic intelligent feeding apparatus for a chemical fiber POY filament ingot. The fully automatic intelligent feeding apparatus comprises a moving device (1), a collaborative robot (2), an unwinding disc loading and unloading mechanism (3), a POY filament ingot carrier (4) and a paper tube tray (5), wherein the moving device has a ground omnidirectional movement function, and the collaborative robot is mounted on the moving device. By controlling the movement of the moving device and the motion of the collaborative robot, an end effector (22) mounted at the end of the collaborative robot can move to a target original filament rack position; by controlling the opening or closing of the end effector, an inner wall of a target POY filament ingot paper tube (8) is clamped or released; the unwinding disc loading and unloading mechanism is fixed on the moving device, such that by controlling the opening or closing of the end effector, an unwinding disc (9) is loaded onto or unloaded from an end face of the POY filament ingot paper tube; and the POY filament ingot carrier and the paper tube tray are mounted on the moving device, such that by controlling the cooperative work between components of the feeding apparatus, the collection of POY empty paper tubes and the feeding of full-roll filament ingots (6) can be automatically completed. The above-mentioned fully automatic intelligent feeding apparatus for a chemical fiber POY filament ingot realizes the automation and intelligence of POY original filament ingot transferring and feeding procedures in a chemical fiber DTY production process, and improves the production quality and the efficiency of yarn in the chemical fiber industry. Also comprised is a fully automatic intelligent feeding method for a chemical fiber POY filament ingot.

## Description

This application claims priority to Chinese Patent Application No. 202110534896.1, titled "FULLY AUTOMATIC INTELLIGENT FEEDING APPARATUS AND FEEDING METHOD FOR CHEMICAL FIBER POY FILAMENT INGOT", filed on May 17, 2021 with the China National Intellectual Property Administration, which is incorporated herein by reference in its entirety.

### FIELD

The present application relates to the field of an intelligent apparatus for chemical fiber, and in particular to a fully automatic intelligent feeding apparatus and feeding method for a chemical fiber POY spindle.

### BACKGROUND

The textile industry is still a labour-intensive industry in China. With the continuous development and progress of science and technology, automated apparatus are more and more widely used in the textile industry. However, a large number of workers are still required to participate in the industry, which indirectly affects the product quality and production efficiency of enterprises. The production of the huge chemical fiber industry in China accounts for more than 70% of the total production in the world each year. To cope with such a large annual production, on the premise of a significant increase in the cost of workers and labor currently, it is urgently required to realize automated and intelligent production for chemical fiber DTY, which also has a positive role in promoting the intelligent and informational development of the whole industry.

The packaging, transportation and feeding of chemical fiber spindles are key factors affecting the automation and intelligence of chemical fiber production. A production capacity of chemical fiber DTY spindles is large in China, resulting in a large demand for chemical fiber POY spindles. A single POY spindle weighs from 10 kg to 20 kg, and the manual transportation and feeding of the POY spindle easily causes contamination of the chemical fiber spindle due to improper handling, which thus affects the quality of DTY products. In addition, high labor intensity results in that it is difficult to recruit workers, thereby increasing labor costs. At home and abroad, the feeding of the chemical fiber POY spindles is still mainly performed manually at present, and the research and development of automatic and intelligent control lines for chemical fiber production is poor. Domestic investment in labour-intensive enterprises such as the textile industry is low, resulting in a low level of automation and intelligence in the industry as a whole.

It should be noted herein that the technical content provided in this section is intended to help those skilled in the art to understand the present application, and may not necessarily constitute the prior art.

### SUMMARY

In view of the above, it is an object of the present application to provide a fully automatic intelligent feeding apparatus and feeding method for a chemical fiber POY spindle to solve a problem of a low level of automation and intelligence in the conventional technology.

In order to achieve the above object, the following technical solutions are provided according to the present application.

A fully automatic intelligent feeding apparatus for a chemical fiber POY spindle includes a mobile device, a collaborative robot, an unwinding disc loading and unloading mechanism, a POY spindle carrier and a paper tube tray, where the mobile device is in contact with a horizontal ground through a wheel mounted at a mobile device chassis, the collaborative robot is connected to a robot mounting base on the mobile device, the unwinding disc loading and unloading mechanism is connected to an upper surface of the mobile device, the POY spindle carrier is connected to a POY spindle carrier mounting base on the mobile device, the paper tube tray is mounted on the upper surface of the mobile device, and the collaborative robot is arranged between the unwinding disc loading and unloading mechanism and the POY spindle carrier.

In an embodiment, the mobile device includes the mobile device chassis, a rotary drive reducer, a rotary drive, the POY spindle carrier mounting base, and the collaborative robot mounting base, where the rotary drive and the collaborative robot mounting base are secured to an upper surface of the mobile device chassis, the rotary drive reducer is mounted on a flange at an end face of the rotary drive, and the POY spindle carrier mounting base is connected to the rotary drive.

In an embodiment, the collaborative robot includes a mechanical arm and an end actuator mounted at an end of the mechanical arm.

In an embodiment, the end actuator includes a base, a driven disc, a wearing ring, a finger, a finger slide rail, a connection mounting plate, a first clamping jaw, a first pneumatic finger, a camera mounting base, a camera, a laser mounting base, a positioning laser, and a cylinder, where the finger slide rail is connected to the base, the driven disc and the wearing ring are mounted in a groove of the base through the finger slide rail, the connection mounting plate is connected to a back side of the base, the first pneumatic finger and the camera mounting base are connected to the connection mounting plate, the first clamping jaw is mounted on the first pneumatic finger, the camera and the laser mounting base are mounted on the camera mounting base, the positioning laser is connected to the laser mounting base, and two ends of the cylinder are connected to the base and the driven disc, respectively.

In an embodiment, the driven disc includes a disc body and a spiral groove hole, where the disc body is mounted on the base, and the spiral groove hole is defined in the disc body.

In an embodiment, the finger includes a bottom seat and a guiding cylinder, where the bottom seat is mounted in the finger slide rail, and the guiding cylinder is mounted in the spiral groove hole of the driven disc.

In an embodiment, the unwinding disc loading and unloading mechanism includes a loading and unloading mechanism base, a second pneumatic finger, and a second clamping jaw, where the second pneumatic finger is connected to the loading and unloading mechanism base, and the second clamping jaw is mounted on the second pneumatic finger.

In an embodiment, the POY spindle carrier includes a carrier chassis, a carrier pillar, and a POY spindle hanger, where the carrier pillar is connected to the carrier chassis, and the POY spindle hanger is mounted on the carrier pillar.

A feeding method for the fully automatic intelligent feeding apparatus for a chemical fiber POY spindle is provided according to another aspect of the present application. The method includes:
S 1, controlling, by a central control system, the fully automatic intelligent feeding apparatus for a chemical fiber POY spindle carrying a POY spindle to travel next to a target source yarn fixing frame;
S2, controlling the positioning laser on the end actuator to emit a cross-shaped laser beam; capturing, by the camera, an image related to a position and an orientation of an assembly of paper tube and unwinding disc; determining the position and the orientation of the assembly of paper tube and unwinding disc based on the cross-shaped laser beam and machine vision technology; and controlling the finger on the end actuator to grip the assembly of paper tube and unwinding disc on the target source yarn fixing frame;
S3, placing, by the end actuator, the assembly of paper tube and unwinding disc onto an upper surface of the unwinding disc loading and unloading mechanism under the action of the collaborative robot; controlling the cylinder to extend to retract the finger; driving, by the collaborative robot, the end actuator to exit from an inner hole of the assembly of paper tube and unwinding disc; controlling the second pneumatic finger on the unwinding disc loading and unloading mechanism to stretch outwards to drive the second clamping jaw to clamp a wall of the inner hole of the assembly of paper tube and unwinding disc, so that the assembly of paper tube and unwinding disc is fixed on the upper surface of the unwinding disc loading and unloading mechanism, where the assembly of paper tube and unwinding disc includes a paper tube and an unwinding disc, and the unwinding disc is arranged within the paper tube;
S4, placing the first pneumatic finger on the end actuator into the inner hole of the unwinding disc by rotating for a certain angle under the action of the collaborative robot; controlling the first pneumatic finger to stretch outwards to drive the first clamping jaw to clamp the wall of the inner hole of the unwinding disc; and taking the unwinding disc, by the first clamping jaw, out of the inner hole of the paper tube under the action of the collaborative robot to separate the unwinding disc from the paper tube;
S5, controlling the collaborative robot to move so that the finger on the end actuator grips the paper tube; firstly, controlling the second pneumatic finger on the unwinding disc loading and unloading mechanism to retract, to drive the second clamping jaw to release clamping on the wall of the inner hole of the paper tube; secondly, controlling the cylinder on the end actuator to retract so that the finger stretches outwards under the rotation of the driven disc, to clamp the wall of the inner hole of the paper tube; and placing, by the collaborative robot, the paper tube onto the paper tube tray for collection;
S6, driving, by the rotary drive reducer, the rotary drive to rotate; rotating, by the POY spindle carrier, the POY spindle to a predetermined angle position under the action of the rotary drive; and griping, by the finger on the end actuator, the POY spindle placed on the POY spindle hanger under the action of the collaborative robot;
S7, controlling the collaborative robot to move to place the POY spindle on the end actuator onto the upper surface of the unwinding disc loading and unloading mechanism;
S8, controlling the cylinder on the end actuator to extend to retract the finger; controlling the second pneumatic finger on the unwinding disc loading and unloading mechanism to stretch outwards to drive the second clamping jaw to clamp the wall of the inner hole of the POY spindle to fix the POY spindle; and controlling the collaborative robot to move to install the unwinding disc on the first clamping jaw to an end face of the POY spindle;
S9, controlling the first pneumatic finger and the first clamping jaw on the end actuator to retract and exit from the inner hole of the unwinding disc under the movement of the collaborative robot; controlling the second pneumatic finger on the unwinding disc loading and unloading mechanism to retract to drive the second clamping jaw to release the fixation of the POY spindle; and controlling the collaborative robot to move so that the finger on the end actuator grips an assembly of POY spindle and unwinding disc and hangs the assembly of POY spindle and unwinding disc on the target source yarn fixing frame; hereto, the automatic feeding of a group of POY spindles is completed; and
S10, repeating steps S1, S2, S3, S4, S5, S6, S7, S8, and S9 to complete the automatic feeding of multiple groups of POY spindles.

Compared with the conventional technology, the present application has the following advantageous effects.

For problems of a large demand for workers, unstable product quality, a low efficiency due to a high labor intensity in a feeding process, and the like, due to a low level of automation in the transportation, feeding and other processes of the chemical fiber POY spindles, in the technical solution of the present application, the interior of the POY spindle is used to clamp and move the POY spindle in the feeding process of the POY spindle, a problem of poor product quality caused by contamination of the spindle in a conventional manual operation and other factors is avoided. Further, the feeding process of POY source yarn in the chemical fiber DTY production line is performed fully automatically and intelligently, solving the problems of high labor costs and low efficiency in actual production. Therefore, the present application has a broad application prospect in the packaging and transportation of chemical fiber production line and a supporting logistics system of a product thereof.

### BRIEF DESCRIPTION OF THE DRAWINGS

The above as well as other objects, features and advantages of the present application will become clearer by the following description of embodiments of the present application with reference to the accompanying drawings. In the drawings:
FIG. 1 is a schematic structural view of a feeding apparatus according to the present application;
FIG. 2 is a schematic structural view of a mobile device according to the present application;
FIG. 3 is a schematic structural view of an end actuator according to the present application;
FIG. 4 is a schematic structural view of a driven disc according to the present application;
FIG. 5 is a schematic structural view of a finger according to the present application;
FIG. 6 is a schematic structural view of an unwinding disc loading and unloading mechanism according to the present application;
FIG. 7 is a schematic structural view of a POY spindle carrier according to the present application;
FIG. 8 is a schematic view of step S1 of a feeding method according to the present application;
FIG. 9 is a schematic view of step S2 of the feeding method according to the present application;
FIG. 10 is a schematic view of step S3 of the feeding method according to the present application;
FIG. 11 is a schematic view of step S4 of the feeding method according to the present application;
FIG. 12 is a schematic view of step S5 of the feeding method according to the present application;
FIG. 13 is a schematic view of step S6 of the feeding method according to the present application;
FIG. 14 is a schematic view of step S7 of the feeding method according to the present application;
FIG. 15 is a schematic view of step S8 of the feeding method according to the present application; and
FIG. 16 is a schematic view of step S9 of the feeding method according to the present application.

Reference numerals in the drawings are listed as follows.
1 mobile device; 2 collaborative robot; 21 mechanical arm; 22 end actuator; 3 unwinding disc loading and unloading mechanism; 4 POY spindle carrier; 5 paper tube tray; 6 POY spindle; 7 assembly of paper tube and unwinding disc; 8 paper tube; 9 unwinding disc; 10 assembly of POY spindle and unwinding disc;
101 mobile device chassis; 102 rotary drive reducer; 103 rotary drive; 104 POY spindle carrier mounting base; 105 collaborative robot mounting base;
2201 base; 2202 driven disc; 22021 disc body; 22022 spiral groove hole; 2203 wearing ring; 2204 finger; 22041 bottom seat; 22042 guiding cylinder; 2205 finger slide rail; 2206 connection mounting plate; 2207 first clamping jaw; 2208 first pneumatic finger; 2209 camera mounting base; 2210 camera; 2211 laser mounting base; 2212 positioning laser; 2213 cylinder;
301 loading and unloading mechanism base; 302 second pneumatic finger; 303 second clamping jaw;
401 carrier chassis; 402 carrier pillar; 403 POY spindle hanger.

### DETAILED DESCRIPTION OF THE EMBODIMENTS

The present application is described below with reference to embodiments, but is not limited to these embodiments.

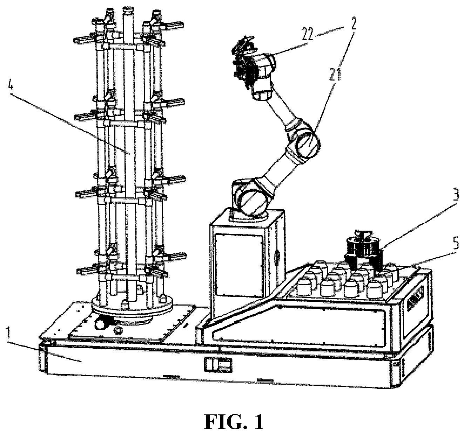

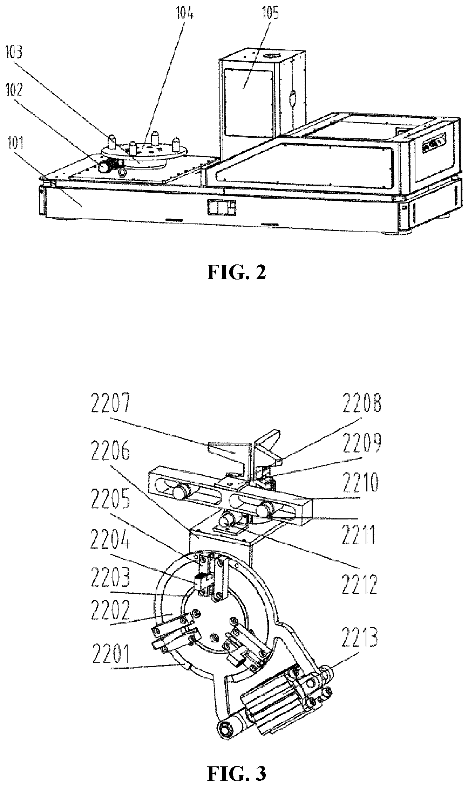

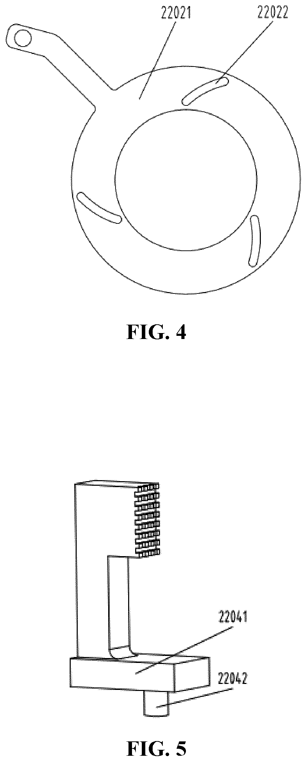

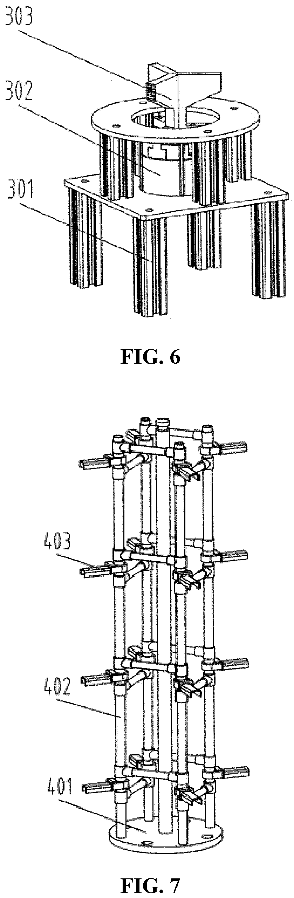

A fully automatic intelligent feeding apparatus for a chemical fiber POY spindle is provided according to the present application. Referring to FIGS. 1 to 7, the fully automatic intelligent feeding apparatus for a chemical fiber POY spindle includes:
a mobile device 1, a collaborative robot 2, an unwinding disc loading and unloading mechanism 3, a POY spindle carrier 4 and a paper tube tray 5. The mobile device 1 is in contact with a horizontal ground through a wheel mounted at a mobile device chassis 101. The collaborative robot 2 is connected to a robot mounting base 105 on the mobile device 1. The unwinding disc loading and unloading mechanism 3 is connected to an upper surface of the mobile device 1. The POY spindle carrier 4 is connected to a POY spindle carrier mounting base 104 on the mobile device 1. The paper tube tray 5 is mounted on the upper surface of the mobile device 1. The collaborative robot 2 is arranged between the unwinding disc loading and unloading mechanism 3 and the POY spindle carrier 4.

The mobile device 1 includes the mobile device chassis 101, a rotary drive reducer 102, a rotary drive 103, the POY spindle carrier mounting base 104, and the collaborative robot mounting base 105. The rotary drive 103 and the collaborative robot mounting base 105 are secured to an upper surface of the mobile device chassis 101. The rotary drive reducer 102 is mounted on a flange at an end face of the rotary drive 103. The POY spindle carrier mounting base 104 is connected to the rotary drive 103.

The collaborative robot 2 includes a mechanical arm 21 and an end actuator 22 mounted at an end of the mechanical arm 21.

The end actuator 22 includes a base 2201, a driven disc 2202, a wearing ring 2203, a finger 2204, a finger slide rail 2205, a connection mounting plate 2206, a first clamping jaw 2207, a first pneumatic finger 2208, a camera mounting base 2209, a camera 2210, a laser mounting base 2211, a positioning laser 2212, and a cylinder 2213. The finger slide rail 2205 is connected to the base 2201. The driven disc 2202 and the wearing ring 2203 are mounted in a groove of the base 2201 through the finger slide rail 2205. The connection mounting plate 2206 is connected to a back side of the base 2201. The first pneumatic finger 2208 and the camera mounting base 2209 are connected to the connection mounting plate 2206. The first clamping jaw 2207 is mounted on the first pneumatic finger 2208. The camera 2210 and the laser mounting base 2211 are mounted on the camera mounting base 2209. The positioning laser 2212 is connected to the laser mounting base 2211. Two ends of the cylinder 2213 are connected to the base 2201 and the driven disc 2202, respectively.

The driven disc 2202 includes a disc body 22021 and a spiral groove hole 22022. The disc body 22021 is mounted on the base 2201, and the spiral groove hole 22022 is defined in the disc body 22021.

The finger 2204 includes a bottom seat 22041 and a guiding cylinder 22042. The bottom seat 22041 is mounted in the finger slide rail 2205, and the guiding cylinder 22042 is mounted in the spiral groove hole of the driven disc 2202.

The unwinding disc loading and unloading mechanism 3 includes a loading and unloading mechanism base 301, a second pneumatic finger 302, and a second clamping jaw 303. The second pneumatic finger 302 is connected to the loading and unloading mechanism base 301. The second clamping jaw 303 is mounted on the second pneumatic finger 302.

The POY spindle carrier 4 includes a carrier chassis 401, a carrier pillar 402, and a POY spindle hanger 403. The carrier pillar 402 is connected to the carrier chassis 401. The POY spindle hanger 403 is mounted on the carrier pillar 402.

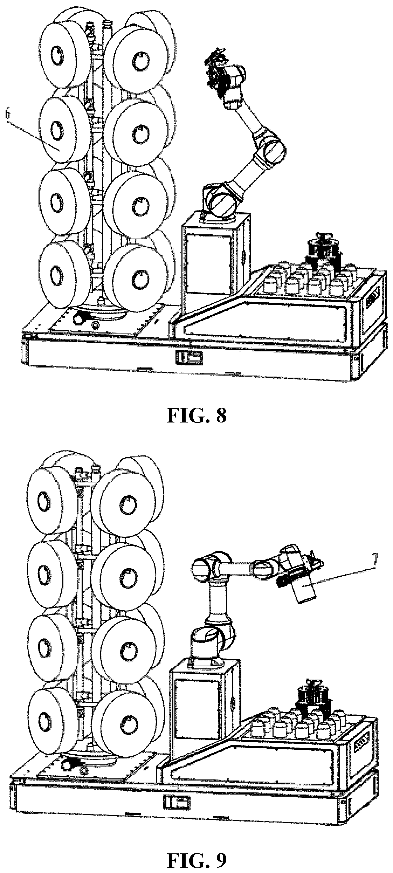

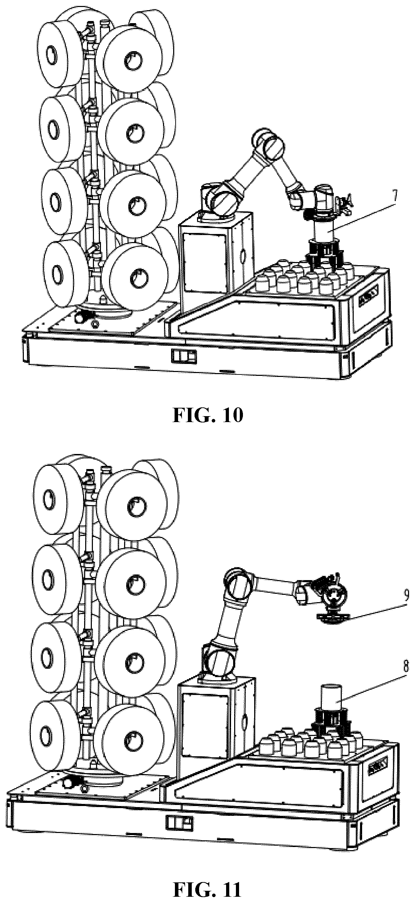

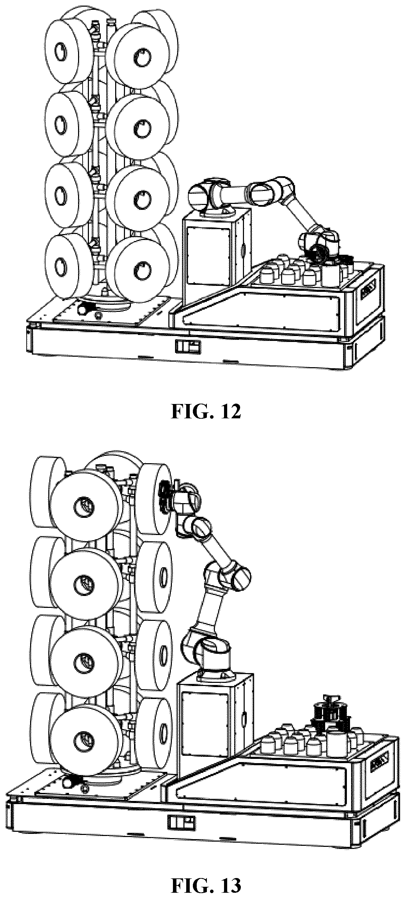

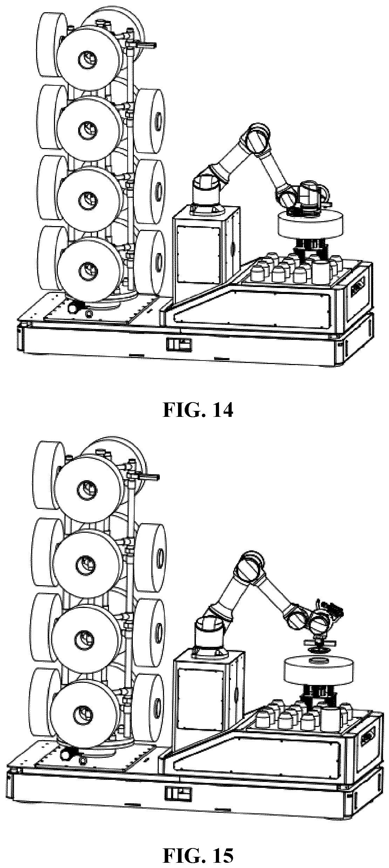

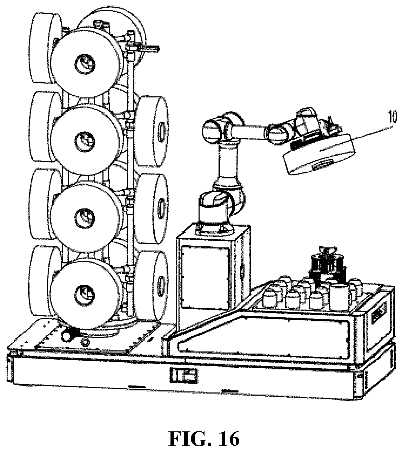

A feeding method for the fully automatic intelligent feeding apparatus for a chemical fiber POY spindle is provided according to the present application. With reference to FIGS. 8 to 16, the method includes:
S1, controlling, by a central control system, the fully automatic intelligent feeding apparatus for a chemical fiber POY spindle carrying a POY spindle 6 to travel next to a target source yarn fixing frame;
S2, controlling the positioning laser 2212 on the end actuator 22 to emit a cross-shaped laser beam; capturing, by the camera 2210, an image related to a position and an orientation of an assembly 7 of paper tube and unwinding disc; determining the position and the orientation of the assembly 7 of paper tube and unwinding disc based on the cross-shaped laser beam and machine vision technology; and controlling the finger 2204 on the end actuator 22 to grip the assembly 7 of paper tube and unwinding disc on the target source yarn fixing frame;
S3, placing, by the end actuator 22, the assembly 7 of paper tube and unwinding disc onto an upper surface of the unwinding disc loading and unloading mechanism 3 under the action of the collaborative robot 2; controlling the cylinder 2213 to extend to retract the finger 2204; driving, by the collaborative robot 2, the end actuator 22 to exit from an inner hole of the assembly 7 of paper tube and unwinding disc; controlling the second pneumatic finger 302 on the unwinding disc loading and unloading mechanism 3 to stretch outwards to drive the second clamping jaw 303 to clamp a wall of the inner hole of the assembly 7 of paper tube and unwinding disc, so that the assembly 7 of paper tube and unwinding disc is fixed on the upper surface of the unwinding disc loading and unloading mechanism 3, where the assembly 7 of paper tube and unwinding disc includes a paper tube 8 and an unwinding disc 9, and the unwinding disc 9 is arranged within the paper tube 8;
S4, placing the first pneumatic finger 2208 on the end actuator 22 into the inner hole of the unwinding disc 9 by rotating for a certain angle under the action of the collaborative robot 2; controlling the first pneumatic finger 2208 to stretch outwards to drive the first clamping jaw 2207 to clamp the wall of the inner hole of the unwinding disc 9; and taking the unwinding disc 9, by the first clamping jaw 2207, out of the inner hole of the paper tube 8 under the action of the collaborative robot 2 to separate the unwinding disc 9 from the paper tube 8;
S5, controlling the collaborative robot 2 to move so that the finger 2204 on the end actuator 22 grips the paper tube 8; firstly, controlling the second pneumatic finger 302 on the unwinding disc loading and unloading mechanism 3 to retract, to drive the second clamping jaw 303 to release clamping on the wall of the inner hole of the paper tube 8; secondly, controlling the cylinder 2213 on the end actuator 22 to retract so that the finger 2204 stretches outwards under the rotation of the driven disc 2202, to clamp the wall of the inner hole of the paper tube 8; and placing, by the collaborative robot 2, the paper tube 8 onto the paper tube tray 5 for collection;
S6, driving, by the rotary drive reducer 102, the rotary drive 103 to rotate; rotating, by the POY spindle carrier 4, the POY spindle 6 to a predetermined angle position under the action of the rotary drive 103; and griping, by the finger 2204 on the end actuator 22, the POY spindle 6 placed on the POY spindle hanger 403 under the action of the collaborative robot 2;
S7, controlling the collaborative robot 2 to move to place the POY spindle 6 on the end actuator 22 onto the upper surface of the unwinding disc loading and unloading mechanism 3;
S8, controlling the cylinder 2213 on the end actuator 22 to extend to retract the finger 2204; controlling the second pneumatic finger 302 on the unwinding disc loading and unloading mechanism 3 to stretch outwards to drive the second clamping jaw 303 to clamp the wall of the inner hole of the POY spindle 6 to fix the POY spindle 6; and controlling the collaborative robot 2 to move to install the unwinding disc 9 on the first clamping jaw 2207 to an end face of the POY spindle 6;
S9, controlling the first pneumatic finger 2208 and the first clamping jaw 2207 on the end actuator 22 to retract and exit from the inner hole of the unwinding disc 9 under the movement of the collaborative robot 2; controlling the second pneumatic finger 302 on the unwinding disc loading and unloading mechanism 3 to retract to drive the second clamping jaw 303 to release the fixation of the POY spindle 6; and controlling the collaborative robot 2 to move so that the finger 2204 on the end actuator 22 grips an assembly 10 of POY spindle and unwinding disc and hangs the assembly 10 of POY spindle and unwinding disc on the target source yarn fixing frame; hereto, the automatic feeding of a group of POY spindles 6 is completed; and
S10, repeating steps S1, S2, S3, S4, S5, S6, S7, S8, and S9 to complete the automatic feeding of multiple groups of POY spindles 6.

In the actual automatic feeding of the chemical fiber POY spindle, it is required to remove the assembly 7 of paper tube and unwinding disc where the source yarn has ran out from the source yarn fixing frame and collect the empty paper tube 8 on the paper tube tray 5, then hang a full roll of POY spindle 6 on the POY spindle carrier 4 on the corresponding source yarn fixing frame. In addition, the unwinding disc 9 is required to be installed on an end face of the paper tube of the POY spindle 6 to reduce the wear on the source yarn during a draw twisting process. The feeding of a group of POY spindles 6 is described above, and the operating principle is described in detail hereinafter.

Operating principle: in operation, the fully automatic intelligent feeding apparatus for a chemical fiber POY spindle carrying the POY spindle 6 is controlled to travel next to a target source yarn fixing frame, the position and the orientation of the assembly 7 of paper tube and unwinding disc are determined by the positioning laser 2212 and the camera 2210 based on the cross-shaped laser beam and the machine vision technology, and the finger 2204 on the end actuator 22 mounted at the end of the collaborative robot 2 is controlled to move to the inner hole of the assembly 7 of paper tube and unwinding disc on the target source yarn fixing frame, and the cylinder 2213 is controlled to retract to rotate the driven disc 2202, thereby driving the finger 2204 to linearly stretch outwards along the finger slide rail 2205 to clamp the wall of the inner hole of the assembly 7 of paper tube and unwinding disc.

The finger 2204 places the assembly 7 of paper tube and unwinding disc onto the upper surface of the unwinding disc loading and unloading mechanism 3 under the action of the movement of the collaborative robot 2 and then exits from the inner hole of the assembly 7 of paper tube and unwinding disc, the second pneumatic finger 302 on the unwinding disc loading and unloading mechanism 3 is controlled to stretch outwards to drive the second clamping jaw 303 to clamp the wall of the inner hole of the assembly 7 of paper tube and unwinding disc, so that the assembly 7 of paper tube and unwinding disc is fixed on the upper surface of the unwinding disc loading and unloading mechanism 3. The first pneumatic finger 2208 enters the inner hole of the unwinding disc 9 under the action of the movement of the collaborative robot 2, the first pneumatic finger 2208 is controlled to stretch outwards to drive the first clamping jaw 2207 to clamp the wall of the inner hole of the unwinding disc 9, and then the first clamping jaw 2207 exits from the inner hole of the paper tube 8 under the action of the movement of the collaborative robot 2 to separate the unwinding disc 9 from the paper tube 8. The second pneumatic finger 302 is controlled to retract to drive the second clamping jaw 303 to release the clamping on the wall of the inner hole of the paper tube 8, and then the cylinder 2213 is controlled to retract to rotate the driven disc 2202, thereby driving the finger 2204 to stretch outwards along the finger slide rail 2205 to clamp the wall of the inner hole of the paper tube 8.

The collaborative robot 2 then places the paper tube 8 onto the paper tube tray 5 for collection. The rotary drive reducer 102 drives the rotary drive 103 to rotate, and the POY spindle carrier 4 rotates the POY spindle 6 to a certain angle position under the action of the rotary drive 103. The finger 2204 on the end actuator 22 grips the POY spindle 6 placed on the POY spindle hanger 403 under the action of the movement of the collaborative robot 2, and places the POY spindle 6 onto the upper surface of the unwinding disc loading and unloading mechanism 3. The cylinder 2213 is controlled to extend so that the finger 2204 retracts inwards along the finger slide rail 2205. The second pneumatic finger 302 on the unwinding disc loading and unloading mechanism 3 is then controlled to stretch outwards to drive the second clamping jaw 303 to clamp the wall of the inner hole of the POY spindle 6 so that the POY spindle 6 is fixed. The collaborative robot 2 rotates by a certain angle to mount the unwinding disc 9 on the first clamping jaw 2207 onto the end face of the POY spindle 6, and the first pneumatic finger 2208 is controlled to drive the first clamping jaw 2207 to retract and exit from the inner hole of the unwinding disc 9 under the action of the movement of the collaborative robot 2.

The second pneumatic finger 302 on the unwinding disc loading and unloading mechanism 3 is then controlled to retract to drive the second clamping jaw 303 to release the fixation of the POY spindle 6, and the collaborative robot 2 rotates by a certain angle, so that the finger 2204 on the end actuator 22 grips the assembly 10 of POY spindle and unwinding disc and places the assembly 10 of POY spindle and unwinding disc onto the target source yarn fixing frame. Hereto, the automatic feeding of a group of POY spindles 6 is completed.

The above descriptions are merely preferred embodiments of the present application and are not intended to limit the present application. Various modifications and variations may be made to the present application by those skilled in the art. Any modifications, equivalent substitutions and improvements within the spirit and the principle of the present application shall be included within the scope of protection of the present application.

## Claims

1. A fully automatic intelligent feeding apparatus for a chemical fiber POY spindle, comprising:
a mobile device (1), a collaborative robot (2), an unwinding disc loading and unloading mechanism (3), a POY spindle carrier (4) and a paper tube tray (5);
wherein the mobile device (1) is in contact with a horizontal ground through a wheel mounted at a mobile device chassis (101); the collaborative robot (2) is connected to a robot mounting base (105) on the mobile device (1); the unwinding disc loading and unloading mechanism (3) is connected to an upper surface of the mobile device (1); the POY spindle carrier (4) is connected to a POY spindle carrier mounting base (104) on the mobile device (1); the paper tube tray (5) is mounted on the upper surface of the mobile device (1); and the collaborative robot (2) is arranged between the unwinding disc loading and unloading mechanism (3) and the POY spindle carrier (4).

2. The fully automatic intelligent feeding apparatus for a chemical fiber POY spindle according to claim 1, wherein
the mobile device (1) comprises the mobile device chassis (101), a rotary drive reducer (102), a rotary drive (103), the POY spindle carrier mounting base (104), and the collaborative robot mounting base (105); wherein the rotary drive (103) and the collaborative robot mounting base (105) are secured to an upper surface of the mobile device chassis (101); the rotary drive reducer (102) is mounted on a flange at an end face of the rotary drive (103); and the POY spindle carrier mounting base (104) is connected to the rotary drive (103).

3. The fully automatic intelligent feeding apparatus for a chemical fiber POY spindle according to claim 1, wherein
the collaborative robot (2) comprises a mechanical arm (21) and an end actuator (22) mounted at an end of the mechanical arm (21).

4. The fully automatic intelligent feeding apparatus for a chemical fiber POY spindle according to claim 3, wherein
the end actuator (22) comprises a base (2201), a driven disc (2202), a wearing ring (2203), a finger (2204), a finger slide rail (2205), a connection mounting plate (2206), a first clamping jaw (2207), a first pneumatic finger (2208), a camera mounting base (2209), a camera (2210), a laser mounting base (2211), a positioning laser (2212), and a cylinder (2213); wherein the finger slide rail (2205) is connected to the base (2201); the driven disc (2202) and the wearing ring (2203) are mounted in a groove of the base (2201) through the finger slide rail (2205); the connection mounting plate (2206) is connected to a back side of the base (2201); the first pneumatic finger (2208) and the camera mounting base (2209) are connected to the connection mounting plate (2206); the first clamping jaw (2207) is mounted on the first pneumatic finger (2208); the camera (2210) and the laser mounting base (2211) are mounted on the camera mounting base (2209); the positioning laser (2212) is connected to the laser mounting base (2211); and two ends of the cylinder (2213) are connected to the base (2201) and the driven disc (2202), respectively.

5. The fully automatic intelligent feeding apparatus for a chemical fiber POY spindle according to claim 4, wherein
the driven disc (2202) comprises a disc body (22021) and a spiral groove hole (22022); wherein the disc body (22021) is mounted on the base (2201), and the spiral groove hole (22022) is defined in the disc body (22021).

6. The fully automatic intelligent feeding apparatus for a chemical fiber POY spindle according to claim 4, wherein
the finger (2204) comprises a bottom seat (22041) and a guiding cylinder (22042); wherein the bottom seat (22041) is mounted in the finger slide rail (2205), and the guiding cylinder (22042) is mounted in the spiral groove hole of the driven disc (2202).

7. The fully automatic intelligent feeding apparatus for a chemical fiber POY spindle according to claim 1, wherein
the unwinding disc loading and unloading mechanism (3) comprises a loading and unloading mechanism base (301), a second pneumatic finger (302), and a second clamping jaw (303); wherein the second pneumatic finger (302) is connected to the loading and unloading mechanism base (301); and the second clamping jaw (303) is mounted on the second pneumatic finger (302).

8. The fully automatic intelligent feeding apparatus for a chemical fiber POY spindle according to claim 1, wherein
the POY spindle carrier (4) comprises a carrier chassis (401), a carrier pillar (402), and a POY spindle hanger (403); wherein the carrier pillar (402) is connected to the carrier chassis (401); and the POY spindle hanger (403) is mounted on the carrier pillar (402).

9. A feeding method for the fully automatic intelligent feeding apparatus for a chemical fiber POY spindle according to any one of claims 1 to 7, comprising:
S1, controlling, by a central control system, the fully automatic intelligent feeding apparatus for a chemical fiber POY spindle carrying a POY spindle (6) to travel next to a target source yarn fixing frame;
S2, controlling the positioning laser (2212) on the end actuator (22) to emit a cross-shaped laser beam; capturing, by the camera (2210), an image related to a position and an orientation of an assembly (7) of paper tube and unwinding disc; determining the position and the orientation of the assembly (7) of paper tube and unwinding disc based on the cross-shaped laser beam and machine vision technology; and controlling the finger (2204) on the end actuator (22) to grip the assembly (7) of paper tube and unwinding disc on the target source yarn fixing frame;
S3, placing, by the end actuator (22), the assembly (7) of paper tube and unwinding disc onto an upper surface of the unwinding disc loading and unloading mechanism (3) under the action of the collaborative robot (2); controlling the cylinder (2213) to extend to retract the finger (2204); driving, by the collaborative robot (2), the end actuator (22) to exit from an inner hole of the assembly (7) of paper tube and unwinding disc; controlling the second pneumatic finger (302) on the unwinding disc loading and unloading mechanism (3) to stretch outwards to drive the second clamping jaw (303) to clamp a wall of an inner hole of the assembly (7) of paper tube and unwinding disc, so that the assembly (7) of paper tube and unwinding disc is fixed on the upper surface of the unwinding disc loading and unloading mechanism (3), wherein the assembly (7) of paper tube and unwinding disc comprises a paper tube (8) and an unwinding disc (9), and the unwinding disc (9) is arranged within the paper tube (8);
S4, placing the first pneumatic finger (2208) on the end actuator (22) into an inner hole of the unwinding disc (9) by rotating for a certain angle under the action of the collaborative robot (2); controlling the first pneumatic finger (2208) to stretch outwards to drive the first clamping jaw (2207) to clamp the wall of the inner hole of the unwinding disc (9); and taking the unwinding disc (9), by the first clamping jaw (2207), out of an inner hole of the paper tube (8) under the action of the collaborative robot (2) to separate the unwinding disc (9) from the paper tube (8);
S5, controlling the collaborative robot (2) to move so that the finger (2204) on the end actuator (22) grips the paper tube (8); firstly, controlling the second pneumatic finger (302) on the unwinding disc loading and unloading mechanism (3) to retract, to drive the second clamping jaw (303) to release clamping on the wall of the inner hole of the paper tube (8); secondly, controlling the cylinder (2213) on the end actuator (22) to retract so that the finger (2204) stretches outwards under the rotation of the driven disc (2202), to clamp the wall of the inner hole of the paper tube (8); and placing, by the collaborative robot (2), the paper tube (8) onto the paper tube tray (5) for collection;
S6, driving, by the rotary drive reducer (102), the rotary drive (103) to rotate; rotating, by the POY spindle carrier (4), the POY spindle (6) to a predetermined angle position under the action of the rotary drive (103); and griping, by the finger (2204) on the end actuator (22), the POY spindle (6) placed on the POY spindle hanger (403) under the action of the collaborative robot (2);
S7, controlling the collaborative robot (2) to move to place the POY spindle (6) on the end actuator (22) onto the upper surface of the unwinding disc loading and unloading mechanism (3);
S8, controlling the cylinder (2213) on the end actuator (22) to extend to retract the finger (2204); controlling the second pneumatic finger (302) on the unwinding disc loading and unloading mechanism (3) to stretch outwards to drive the second clamping jaw (303) to clamp the wall of an inner hole of the POY spindle (6) to fix the POY spindle (6); and controlling the collaborative robot (2) to move to install the unwinding disc (9) on the first clamping jaw (2207) to an end face of the POY spindle (6);
S9, controlling the first pneumatic finger (2208) and the first clamping jaw (2207) on the end actuator (22) to retract and exit from the inner hole of the unwinding disc (9) under the movement of the collaborative robot (2); controlling the second pneumatic finger (302) on the unwinding disc loading and unloading mechanism (3) to retract to drive the second clamping jaw (303) to release the fixation of the POY spindle (6); and controlling the collaborative robot (2) to move so that the finger (2204) on the end actuator (22) grips an assembly (10) of POY spindle and unwinding disc and hangs the assembly (10) of POY spindle and unwinding disc on the target source yarn fixing frame; hereto, the automatic feeding of a group of POY spindles (6) is completed; and
S10, repeating steps S1, S2, S3, S4, S5, S6, S7, S8, and S9 to complete the automatic feeding of a plurality of groups of POY spindles (6).
